# EUROPEAN PATENT SPECIFICATION

(11) **EP 1 738 235 B1**
(45) Date of publication and mention of the grant of the patent: **16.01.2008**
(21) Application number: 05717053.2
(22) Date of filing: 15.03.2005
(51) Int. Cl.: G05B 19/418

(54) **CONTROL SYSTEM, METHOD AND COMPUTER PROGRAM**
STEUERSYSTEM, VERFAHREN UND RECHNERPROGRAMM
SYSTEME DE COMMANDE, PROCEDE ET PROGRAMME INFORMATIQUE

(30) Priority: 15.03.2004 US 552753 P
(43) Date of publication of application: 03.01.2007
(73) Proprietor: ABB AB, 721 83 Västerås (SE)
(72) Inventor: MUSTAPIC, Goran, S-724 76 Västeras (SE); SJÖBERG, Ralph, S-723 55 Västeras (SE)
(74) Representative: Reyier, Ann-Mari
(86) International application number: PCT/EP2005/051180
(87) International publication number: WO 2005/091095

(56) References cited:
- EP-A- 0 982 644
- EP-A- 1 256 861
- EP-A- 1 327 938
- US-B1- 6 442 446
- US-B1- 6 547 884

## Description

### TECHNICAL FIELD

The present invention relates to a control system for an industrial robot. The control system comprises program storage for storage of a user program comprising one or more program routines including a series of robot program instructions written in a robot language, and a program executer adapted, when running the user program, to execute the stored robot program instructions. The invention further relates to a control system for an industrial robot.

### BACKGROUND ART

Before an industrial robot is to be put in operation for a certain task, it must be programmed to carry out the task. When programming an industrial robot, a robot language is used. The robot program is comprised in a control system. There exists a plurality of different robot languages, since each robot supplier has developed its own robot language. The robot language is formed such that it is simple to use for the robot user, who may be a person without knowledge or experience of programming. A man-machine interface is used to program the robot. An interface must always work.

Change operative system in the whole or in a part of the control system is usually done by loading the new operative system from a computer disc (CD).

A problem when working with a system of several robots is that the different robots have different programs versions that are not compatible with each other and the man-machine interface controlling the robot is unable to read all the current versions of the programs.

EP1256861 discloses a control system comprising a PLC, which is suitable for controlling a manipulator. The control system comprises a program memory for storage of a program, which comprises a plurality of program routines including a series of program instructions written in a user program code. The control system is further provided with means to communicate via Internet with a man-machine interface. According to the document, the appropriate version of the programming software is downloaded to the man-machine interface.

### SUMMARY OF THE INVENTION

The object of the present invention is to provide a control system for an industrial robot, which is able to provide a man-machine interface with the right version of the program code for the code reading program. The object of the present invention is also to provide a control system that is able to control a system of industrial robots. The object of the present invention is also to provided a man-machine interface such as a manipulating means for manipulating the robot with the right version of the program code for the code reading program in that the man-machine interface always is able to communicate with the control system.

This object is achieved by a control system as defined in claim 1.

This object is further achieved by a man machine interface as defined in claim 4.

This object is further achieved by a method as defined in claim 10.

The manipulating means device has in an exemplary embodiment of the invention only a start-up application, when the start-up application is started, power-on.

The manipulating means device is asking the control system for the right version of each application that is needed to communicate with the control system.

The manipulating means device is then downloading the application in its memory. Immediately after that the download is ready the application is started.

This means that the device always can connect to a control system. This also means that the device always can manipulate any industrial robot in a system of different industrial robots with different version of applications by changing version of the applications. In this way always the right version of the programs is available.

An advantage of the invention is that the versions of the programs in the manipulating means are always right. The version in the manipulating means is always compatible. That is the programs in the manipulating means are always one-to-one compatible with both the control system and the manipulators.

Another advantage of the invention is that the version of the programs in the manipulating means is now unimportant.

Another advantage of the invention is that the download of the programs and therefore the start of the manipulated system are quick.

In an exemplary embodiment of a control system according to the invention for a manipulator, the control system comprises:
a program memory for storage of programming code such as a user program comprising one or more program routines including a series of manipulator program instructions written in a user program code, and an operative system and a deployment application program for running said user programs.

The control system is further provided with means to communicate with a man-machine interface. The control system is also provided with means to send information to the man-machine-interface concerning the right versions of said program code for said control system/manipulator. The control system is further provided with means to transfer said program code to a man-machine interface.

In an exemplary embodiment of the control system according to the invention the means to transfer program code is wireless means.

In an exemplary embodiment of the control system according to the invention the means to communicate with the man-machine interface is wireless means.

In an exemplary embodiment of the control system according to the embodiment the means to send information is wireless means.

In an exemplary embodiment of the control system according to the invention the programming code is any of a list: deployment program, operative system, boot loader, user programs.

In an exemplary embodiment of the man-machine interface according to the invention for manipulating a manipulator the man-machine interface comprise means to recognize the right version of programming code needed for communicating with a remote control system.

In an exemplary embodiment of the man-machine interface according to the invention the means to recognize the right version of programming code is wireless means.

In an exemplary embodiment of the man-machine interface the man-machine interface according to the invention comprise means to down-load the right version of said programming code.

In an exemplary embodiment of the man-machine interface according to the invention the means to down-load the programming code is wireless means.

In an exemplary embodiment of the man-machine interface according to the invention the man-machine interface is a hand-held device.

In an exemplary embodiment of the man-machine interface the man-machine interface comprise means for storage of programming code such as an operative system, a deployment application and a boot loader and a user program.

In an exemplary embodiment of the man-machine interface the man-machine interface has a boot loader already installed, when power-on.

In an exemplary embodiment of the man-machine interface the man-machine interface comprises means to after downloading the right programming code version start the manipulator.

In an exemplary embodiment of a method to download program code to a man-machine interface according to the invention the man-machine interface asks a remote control system for the right version of program code for each application.

In an exemplary embodiment of a method to download program code to a man-machine interface according to the invention the right version of program code for each application is downloaded from the control system into the memory of the man-machine interface.

In an exemplary embodiment of a method to download program code to a man-machine interface according to the invention the downloading of program code into a memory of the man-machine interface is wireless.

In an exemplary embodiment of a method to download program code to a man-machine interface according to the invention the manipulating device has a boot loader installed, when started and the boot loader downloads the program code.

A computerised robot system including means to perform a method in a control system for controlling a process or equipment, according to any of claims 14-17.

A computer program comprising programming instructions to control a computer or a computer process to make it perform a method in a control system for controlling a process or equipment, according to any of claims 14-17.

Use of a computer program according to claim 13 to control a computer or a computer process to make it perform a method in an control system for controlling an manipulator, according to any of claims 14-17.

A computer program according to claim 19 recorded on one or several computer-readable media.

A graphical user interface for controlling a process or manipulator in a control system, which control system comprises program components, which enables a process, by using a method according to any of claims 14-17.

A graphical user interface for controlling a process or manipulator in a control system, which control system comprises program components, which enables a process, characterized by down-loading the right version of the programs components.

A system for controlling a process or equipment in a control system, characterized by comprising components from any of the list of: a computer such as a tablet personal computer PC, a memory, a computer program and a man-machine interface.

A system comprising a man-input means to load program code into a man-machine interface.

### BRIEF DESCRIPTION OF THE DRAWINGS

- Fig. 1: shows part of a industrial robot system according to the invention, and
- Fig. 2: shows an example of a memory of a man-machine interface device before program code is loaded and a personal computer with a part of a control system memory in a control system according to an embodiment of the invention, and
- Fig. 3: shows of a man-machine interface device hardware memory with applications and the software in same memory after the program code that is down loaded.

### DETAILED DESCRIPTION OF PREFERRED EMBODIMENTS OF THE INVENTION

An industrial robot comprises a manipulator and a control system for controlling the movements of the manipulator. A moveable manipulator is for instance a rotatable axis that for instance are arranged to rotate a work piece or composed of interconnected parts. A manipulator connected to a control system, such as a robot for instance comprises parts such as, a foot, robot arms, arm housing, a wrist and a turn disc. Two adjoining robot parts are connected to each other so as to be rotatable in relation to each other around an axis of rotation, or are linearly displaceable in relation to each other.

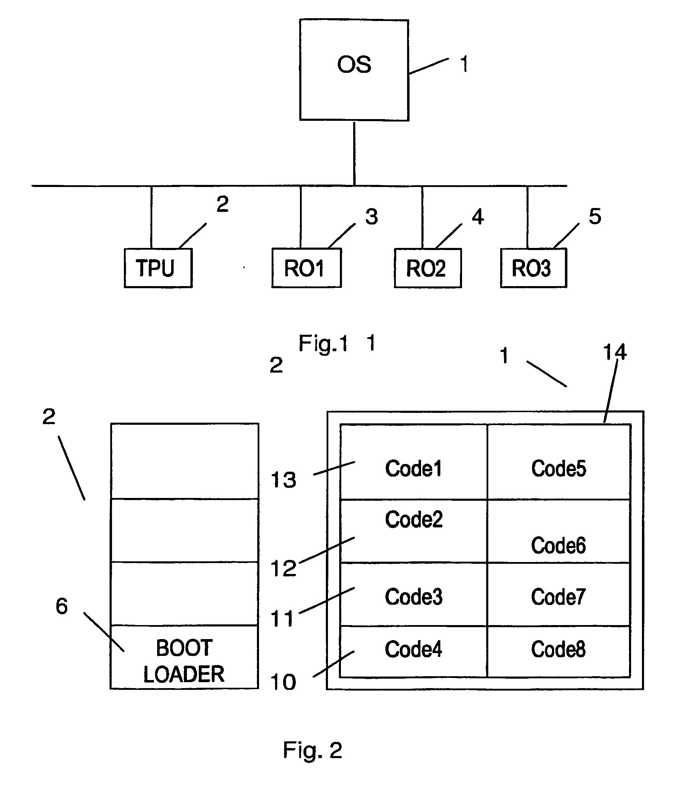

Fig. 1 shows a three-robot system. The system comprises three robots (3, 4, 5), a computer 1 such as a tablet personal computer (PC) comprising a control system for controlling the movements of the manipulator and a man-machine interface 2. The computer comprises at least a central processing unit (CPU), input/output means (I/O), and a memory. The control system comprises an operative system for the system, user programs 14, (Code5, Code6, Code7, Code8) and programs to control, handle and execute the user programs 10,11,12,13. The control system is located in the memory on said computer. The memories are any of a list but not limited too: Read access memory, RAM memory, FLASH memory, and Permanent memory

The man-machine interface is a manipulating means for manipulating the manipulators of the robots. During programming and testing of a user program, the robot operator communicates with the control system in the computer 1 via the man-machine interface, the manipulator means 2. The operator inputs commands to the control system, for example, for starting and stopping execution of the robot control programs. Each robot has several different control programs. The programs can be unique programs for each robot.

Figure2 shows an example of a memory of a man-machine interface device 2 before program code is loaded and a personal computer 1 with a part of a control system memory in a control system according to an embodiment of the invention. The manipulating means is interacting with the control system handling the control programs for each robot. The manipulating means also comprise at least a CPU, I/O means and a memory. In this case the manipulating means has a special memory. The memory has locations 6, 7, 8, 9 for storing at least one operative system and programs needed for the basic programming of the manipulator means. Said locations in the memory are provided to comprise the operative system 7 and the different programs with different functions such as a Boot Loader 6 and a Deployment Application 8. There are also locations in the memory with for instance the memory provided for installing the user programs 9.
- Boat loader is software that can down-load one or more programs or operating systems by reading file system information or through a pointer to a disk partition containing compatible files for down-loading an operative system or another program. Programming code that is executed at power on. Usually installed by the supplier of the manipulating means device.
- Operative system is software that creates and organizes the environmental in which the operator works and communicates with the computer BIOS, the link between the software and hardware in the computer. The operative system OS is a static program.
- Execution programs such as deployment application programs, interpreter, interprets the user programs, a "motor" to drive the user programs. Deployment application programs, loads, install, distribute and moves programming code memory on the control system computer to the manipulating means memory. Ready packages in the robot control system: of binary files with already compiled codes. The Deployment application program code is always chosen as to be compatible with the actual Operative system. Examples are Internet explorer or other execution programs.
- User program (Code5, Code6, Code7, Code8) comprises one or more program routines including a series of robot program instructions written in a robot language. User program example is for example written in Hypertext Markup Language HTML code or Java code. Test program, Base system etc. The programming in place on the manipulating means is depending on which software interface that is communication protocol that is used.

In an embodiment of the invention the manipulating means is first empty except for the Boot loader 6. The Boot loader provides means for down-load the other programs. The Boot loader is a small program embedded in the memory of the manipulating means and is communicating with the Control system for the system: The question asked is which version is needed in respect of the actual manipulator? The manipulating means device has only a small start- up application, the boot loader when power-on. The manipulating means device is asking the controller for the version of its application. The manipulating means device is then downloading the application in its memory. Immediately after the download is ready the application is started. This means that the device always can connect to a robot controller. The Boot Loader fetches one program code 10, 11, 12, and 13 at a time from the computer 1.

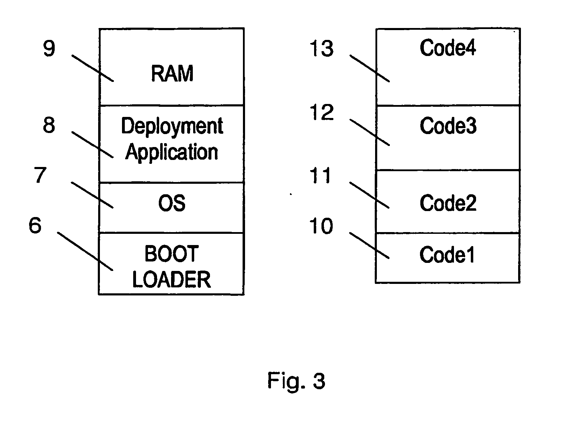

Figure 3 shows the software and hardware configuration of the man-machine interface. In this case the manipulating means has a special memory. The memory has locations 6, 7, 8, 9 for storing at least one operative system and programs needed for the basic programming of the manipulator means.

Down loading of programming code to the man-machine interface according to a preferred embodiment of the invention comprises:
- resetting the memory of the manipulating means,
- starting the boot loader,
- checking the version of the Operative system,
- connecting to the memory in the control system computer,
- the Boot Loader asking the Operative system which programs/program versions the robot needs, and
- down-loading the programs,
The manipulator means is now ready for programming the robot.

In another preferred embodiment according the invention the memory of the manipulating means is not reset instead the following is made, for loading the programming code:
- checking which deployment application program is active,
- checking what version of the deployment application program is needed to be compatible with the actual manipulators in the actual system, and
- comparing the results and make a decision thereupon: Keep the deployment application program or download a new version?

In another preferred embodiment according the invention the Boot loader Discover a new version of OS in the control system. Then it automatically changes the OS. The Deployment application is unaffected. The Boot loader is:
- checking which operative system is active,
- checking what version of the operative system is needed to be compatible with the actual manipulators in the actual system, and
- comparing the results and make a decision thereupon: Keep the operative system program or download a new version?

Programming a robot using the man-machine interface comprises:
- activating programming code from a memory in the control system computer.

The invention is applicable on but not limited to industrial robots.

The control program and the operative programs are chosen independently from each other. The version of the programs in the manipulating is now unimportant; the version in the manipulating means is always compatible.

The network transmitting the programming code is either wireless network, or transmitting by wire.

In another preferred embodiment according the invention all program code of the memory of the manipulating means is exchangeable. That means that also the boot loader is exchangeable.

For User Robot controller control system the down-load of the program takes less than 70sec.

In another preferred embodiment according the invention the deployment application program code is burnt in a Flash memory. It takes about 5 minutes to burn the programming code.

In another preferred embodiment according the invention the Boot loader Discover a new version of OS in the control system. Then it automatically changes the OS. The Deployment application is unaffected.

It takes typically 5 min to change OS.

This invention is applicable in all industrial areas where manipulator with a control system is handled. For instance run manual, programming, testing, showing production images, running Communication program, GUI, controlling manipulators- start or stop program, update program code or when service is required on the manipulator.

The microprocessor, or processors, of the manipulating means device, comprises at least one central processing unit CPU performing the steps of the method according to an aspect of the invention. This is performed with the aid of one or more computer programs, which are stored at least in part in memory accessible by the processor. It is to be understood that the computer programs are also being run on one or more general-purpose industrial microprocessors or computers instead of a specially adapted computer.

The computer program comprises computer program code elements or software code portions that make the computer perform the method using equations, algorithms, data and calculations previously described. A part of the program may be stored in a processor as above, but also in a Read only memory ROM, Read access memory RAM, and Programmable read only memory PROM, Erasable Programmable read only memory EPROM or EEPROM chip or similar memory means. The program in part or in whole may also be stored on, or in, another suitable computer-readable medium such as a magnetic disc, CD-ROM or DVD disk, hard disk, magneto-optical disk, CD-ROM or DVD disk, hard disk, magneto-optical memory storage means, in volatile memory, in flash memory, as firmware, or stored on a data server. Removable memory media such as removable hard drives, bubble memory device, flash memory devices and commercially available proprietary removable media such as the Sony memory stick and memory cards for digital cameras, video cameras and the like may also be used.

The computer programs described may also be arranged in part as a distributed application capable of running on several computers or computer systems at more or less the same time.

A database may also contain information to be used in a method in an industrial safety system for controlling a process or equipment, according to the invention.

A website may also comprise client/server means to perform a method in an industrial safety system for controlling a process or equipment, according to the invention.

A data communication signal may also be used for controlling at least one component in an industrial facility for an industrial process. The data communication signal comprises safety information for controlling a process or equipment in an industrial safety system such as other signals generated as a result of an event or alarm.

Although the embodiments disclosed describe a three-manipulator-system, the control system according to the present invention can be used to control any number of mechanical units from a single controller. Addition of a mechanical unit to a particular system requires only the addition of a configuration file into the inventive control system.

The invention is of course not in any way restricted to the preferred embodiments thereof described above, but many possibilities to modifications thereof would be apparent to a man with ordinary skill in the art without departing from the basic idea of the invention as defined in the appended claims.

## Claims

1. A control system (1) for at least one manipulator (3, 4, 5), wherein the control system comprises a program memory for storage of programming code for the manipulator and means for communicating with a man-machine interface (2) comprising a program memory (6-9) for storage of programming code for manipulating the manipulator, **characterized in that** the control system is provided with means to send information to the man-machine interface concerning the right version of said programming code for the manipulator and means to transfer said programming code to the man-machine interface if a new version of the programming code is needed.

2. A control system according to claim 1, **characterized in that** the means to transfer program code is wireless means.

3. A control system according to any of the claims 1-2, **characterized in that** the programming code is any of a list: deployment application program, operating system, boot loader, user programs.

4. Man-machine interface (2) for manipulating at least one manipulator (3, 4, 5), wherein the man-machine interface comprises a program memory (6-9) for storage of programming code (10-13) for manipulating the manipulator and means for communicating with a control system (1) comprising a program memory for storage of programming code for manipulating the manipulator, **characterized in that** the man-machine interface is provided with means to receive information from the control system concerning the right version of said programming code for the manipulator, and based thereon to make a decision upon keeping the programming code in the program memory of the man-machine interface or download a new version, and means to receive said new version of the programming code.

5. Man-machine interface according to claim 4, **characterized in that** the means to download the programming code is wireless means.

6. Man-machine interface according to any of claims 4-5 **characterized in that** the man-machine interface is a hand-held device (2).

7. Man-machine interface according to any of claims 4-6, **characterized in that** the programming code is any of a list: deployment application program, operating system, boot loader, user programs.

8. Man-machine interface according to any of claims 4-7, **characterized in that** the man-machine interface has a boot loader already installed, when power-on.

9. Man-machine interface according to any of claims 4-8, **characterized in that** the man-machine interface comprise means to start the manipulator after downloading the right programming code version.

10. Method to download programming code to a man-machine interface (2) for manipulating at least one manipulator (3-5), wherein the man-machine interface comprises a program memory (6-9) for storage of programming code for manipulating the manipulator and means for communicating with a control system of the manipulator, **characterized in that** the method comprises;
- checking which version of the programming code is needed to be compatible with the manipulator,
- comparing the needed version of the programming code and the stored programming code and based therein making a decision upon keeping the programming code in the program memory of the man-machine interface or downloading a new version, and
- transferring the needed version of the programming code to the man-machine interface if a new version is needed.

11. Method according to claim 10, **characterized in that**
- the man-machine interface asks a remote control system for the right version of program code for each application.

12. Method according to any of claims 10-11 **characterized in that**
- the right version of program code for each application is downloaded from the control system into the memory of the man-machine interface.

13. Method according to any of claims 10-12 **characterized in that**
- the downloading of program code into a memory of the man-machine interface is wireless.

14. Method according to any of claims 10-13 **characterized in that** the manipulating device has a boot loader installed, when started, and the boot loader downloads ths programming code.

15. A computer program comprising programming instructions to control a computer or a computer process to make it perform a method in a control system for controlling a process or equipment, according to any of claims 10-14.

16. Use of the method according to any of claims 10-14, to download programming code to a man-machine interface of a robot system comprising a plurality of manipulators.

17. A computer program according to claim 15 recorded on one or several computer-readable media.

## Patentansprüche

1. Steuerungssystem (1) für mindestens einen Manipulator (3, 4, 5), bei dem das Steuerungssystem einen Programmspeicher zum Speichern eines Programmierungscodes für den Manipulator und ein Mittel zum Kommunizieren mit einer Mensch-Maschine-Schnittstelle (2) mit einem Programmspeicher (6-9) zum Speichern eines Programmierungscodes zum Manipulieren des Manipulators, aufweist, **dadurch gekennzeichnet, dass** das Steuerungssystem mit einem Mittel zum Senden von Information an die Mensch-Maschine-Schnittstelle betreffend die richtige Version des Programmierungscodes für den Manipulator und einem Mittel zum Übermitteln des Programmierungscodes an die Mensch-Maschine-Schnittstelle, falls eine neue Version des Programmierungscodes erforderlich ist, vorgesehen ist.

2. Steuerungssystem nach Anspruch 1, **dadurch gekennzeichnet, dass** das Mittel zum Übertragen eines Programmcodes ein kabelloses Mittel ist.

3. Steuerungssystem nach einem der Ansprüche 1-2, **dadurch gekennzeichnet, dass** der Programmierungscode einer ist aus einer Liste: Deployment-Applikations-Programm, Betriebssystem, Boot-Loader, Anwenderprogramme.

4. Mensch-Maschine-Schnittstelle (2) zum Manipulieren mindestens eines Manipulators (3, 4, 5), bei der die Mensch-Maschine-Schnittstelle einen Programmspeicher (6-9) zum Speichern eines Programmierungscodes (10-13) zum Manipulieren des Manipulators und ein Mittel zum Kommunizieren mit einem Steuerungssystem (1) mit einem Programmspeicher zum Speichern eines Programmierungscodes zum Manipulieren des Manipulators, aufweist, **dadurch gekennzeichnet, dass** die Mensch-Maschine-Schnittstelle mit einem Mittel zum Empfangen von Information von dem Steuerungssystem betreffend die richtige Version des Programmierungscodes für den Manipulator, und darauf basierend zum Fällen einer Entscheidung hinsichtlich Beibehalten des Programmierungscodes in dem Programmspeicher der Mensch-Maschine-Schnittstelle oder Herunterladen einer neuen Version, und einem Mittel zum Empfangen der neuen Version des Programmierungscodes versehen ist.

5. Mensch-Maschine-Schnittstelle nach Anspruch 4, **dadurch gekennzeichnet, dass** das Mittel zum Herunterladen des Programmierungscodes ein kabelloses Mittel ist.

6. Mensch-Maschine-Schnittstelle nach einem der Ansprüche 4-5, **dadurch gekennzeichnet, dass** die Mensch-Maschine-Schnittstelle eine tragbare Vorrichtung (2) ist.

7. Mensch-Maschine-Schnittstelle nach einem der Ansprüche 4-6, **dadurch gekennzeichnet, dass** der Programmierungscode einer ist aus einer Liste: Deployment-Applikations-Programm, Betriebssystem, Boot-Loader, Anwenderprogramme.

8. Mensch-Maschine-Schnittstelle nach einem der Ansprüche 4-7, **dadurch gekennzeichnet, dass** die Mensch-Maschine-Schnittstelle einen bereits installierten Boot-Loader aufweist, wenn sie angeschaltet ist.

9. Mensch-Maschine-Schnittstelle nach einem der Ansprüche 4-8, **dadurch gekennzeichnet, dass** die Mensch-Maschine-Schnittstelle ein Mittel zum Starten des Manipulators nach einem Herunterladen der richtigen Programmierungscodeversion aufweist.

10. Verfahren zum Herunterladen eines Programmierungscodes auf eine Mensch-Maschine-Schnittstelle (2) zum Manipulieren mindestens eines Manipulators (3-5), bei dem die Mensch-Maschine-Schnittstelle einen Programmspeicher (6-9) zum Speichern eines Programmierungscodes zum Manipulieren des Manipulators und ein Mittel zum Kommunizieren mit einem Steuerungssystem des Manipulators aufweist, **dadurch gekennzeichnet, dass** das Verfahren aufweist:
- Überprüfen, welche Version des Programmierungscodes für eine Kompatibilität mit dem Manipulator erforderlich ist,
- Vergleichen der erforderlichen Version des Programmierungscodes und des gespeicherten Programmierungscodes und darauf basierend Fällen einer Entscheidung hinsichtlich Beibehalten des Programmierungscodes in dem Programmspeicher der Mensch-Maschine-Schnittstelle oder Herunterladen einer neuen Version, und
- Übermitteln der erforderlichen Version des Programmierungscodes an die Mensch-Maschine-Schnittstelle, falls eine neue Version erforderlich ist.

11. Verfahren nach Anspruch 10, **dadurch gekennzeichnet, dass** die Mensch-Maschine-Schnittstelle ein Fernsteuerungssystem für die richtige Version eines Programmcodes für jede Anwendung abfragt.

12. Verfahren nach einem der Ansprüche 10-11, **dadurch gekennzeichnet, dass** die richtige Version eines Programmcodes für jede Applikation aus dem Steuerungssystem in den Speicher der Mensch-Maschine-Schnittstelle heruntergeladen wird.

13. Verfahren nach einem der Ansprüche 10-12, **dadurch gekennzeichnet, dass** das Herunterladen eines Programmcodes in einen Speicher der Mensch-Maschine-Schnittstelle kabellos ist.

14. Verfahren nach einem der Ansprüche 10-13, **dadurch gekennzeichnet, dass** die Manipulationseinrichtung einen Boot-Loader aufweist, der installiert ist, wenn sie gestartet wird, und dass der Boot-Loader den Programmierungscode herunterlädt.

15. Computerprogramm, mit Programmierungsanweisungen zum Steuern eines Computers oder eines Computerprozesses derart, dass er ein Verfahren in einem Steuerungssystem zum Steuern eines Prozesses oder einer Anlage nach einem der Ansprüche 10-14 durchführt.

16. Verwendung des Verfahrens nach einem der Ansprüche 10-14 zum Herunterladen eines Programmierungscodes auf eine Mensch-Maschine-Schnittstelle eines Robotersystems, das eine Vielzahl von Manipulatoren aufweist.

17. Computerprogramm nach Anspruch 15, das auf einem oder mehreren computerlesbaren Medien aufgezeichnet ist.

## Revendications

1. Système de commande (1) pour au moins un manipulateur (3, 4, 5), dans lequel le système de commande comprend une mémoire de programme pour le stockage d'un code de programmation pour le manipulateur et un moyen de communication avec une interface homme-machine (2), comprenant une mémoire de programme (6 - 9) pour le stockage d'un code de programmation permettant de manipuler le manipulateur, **caractérisé en ce que** le système de commande est muni d'un moyen d'envoi des informations à l'interface homme-machine au sujet de la version correcte dudit code de programmation pour le manipulateur et un moyen de transfert dudit code de programmation à l'interface homme-machine, si une nouvelle version du code de programmation est nécessaire.

2. Système de commande selon la revendication 1, **caractérisé en ce que** le moyen de transfert du code de programmation est un moyen sans fil.

3. Système de commande selon l'une quelconque des revendications 1 à 2, **caractérisé en ce que** le code de programmation est l'un quelconque d'une liste : programme d'application de déploiement, système d'exploitation, chargeur de programme amorce, programmes utilisateurs.

4. Interface homme-machine (2) permettant de manipuler au moins un manipulateur, dans laquelle l'interface homme-machine comprend une mémoire de programme (6 - 9) pour le stockage d'un code de programmation (10 - 13) permettant de manipuler le manipulateur et un moyen de communication avec un système de commande (1), comprenant une mémoire de programme pour le stockage d'un code de programmation permettant de manipuler le manipulateur, **caractérisée en ce que** l'interface homme-machine est munie d'un moyen de réception des informations provenant du système de commande au sujet de la version correcte dudit code de programmation pour le manipulateur, et fondé sur celui-ci pour prendre la décision de conserver le code de programmation dans la mémoire de programme de l'interface homme-machine ou de télécharger une nouvelle version, et un moyen de réception de ladite nouvelle version du code de programmation.

5. Interface homme-machine selon la revendication 4, **caractérisée en ce que** le moyen de téléchargement du code de programmation est un moyen sans fil.

6. Interface homme-machine selon l'une quelconque des revendications 4 à 5, **caractérisée en ce que** l'interface homme-machine est un dispositif portable.

7. Interface homme-machine selon l'une quelconque des revendications 4 à 6, **caractérisée en ce que** le code de programmation est l'un quelconque d'une liste : programme d'application de déploiement, système d'exploitation, chargeur de programme amorce, programmes utilisateurs.

8. Interface homme-machine selon l'une quelconque des revendications 4 à 7, **caractérisée en ce que** l'interface homme-machine possède un chargeur de programme amorce déjà installé, lorsqu'elle est mise sous tension.

9. Interface homme-machine selon l'une quelconque des revendications 4 à 8, **caractérisée en ce que** l'interface homme-machine comprend un moyen de lancer le manipulateur après avoir téléchargé la version correcte du code de programmation.

10. Procédé de téléchargement d'un code de programmation dans une interface homme-machine (2) permettant de manipuler au moins un manipulateur (3 à 5), dans lequel l'interface homme-machine comprend une mémoire de programme (6 à 9) pour le stockage d'un code de programmation (10 à 13) permettant de manipuler le manipulateur et un moyen de communication avec un système de commande du manipulateur, **caractérisé en ce que** le procédé comprend :
- la vérification de la version du code de programmation qui est nécessaire, pour être compatible avec le manipulateur,
- la comparaison de la version nécessaire du code de programmation et du code de programmation stocké et, en se fondant sur celui-ci, la prise de décision de conserver le code de programmation dans la mémoire de programme de l'interface homme-machine ou de télécharger une nouvelle version, et
- le transfert de la version nécessaire du code de programmation dans l'interface homme-machine, si une nouvelle version est nécessaire.

11. Procédé selon la revendication 10, **caractérisé en ce que**
- l'interface homme-machine demande à un système de commande à distance la version correcte du code de programme pour chaque application.

12. Procédé selon l'une quelconque des revendications 10 - 11, **caractérisé en ce que**
- la version correcte du code de programmation pour chaque application est téléchargée à partir du système de commande dans la mémoire de l'interface homme-machine.

13. Procédé selon l'une quelconque des revendications 10 à 12, **caractérisé en ce que** :
le téléchargement du code de programmation se fait dans la mémoire de l'interface homme-machine sans fil.

14. Procédé selon l'une quelconque des revendications 10 à 13, **caractérisé en ce que** le dispositif de manipulation possède un chargeur de programme amorce lorsqu'il est démarré, et le chargeur de programme amorce télécharge le code de programmation.

15. Programme informatique comprenant la programmation d'instructions destinées à commander un ordinateur ou un processus informatique, afin qu'il exécute un procédé dans un système de commande, afin de commander un processus ou un matériel selon l'une quelconque des revendications 10 à 14.

16. Utilisation du procédé selon l'une quelconque des revendications 10 à 14, afin de télécharger le code de programmation dans une interface homme-machine d'un système de robot comprenant une pluralité de manipulateurs.

17. Programme informatique selon la revendication 15, enregistré sur un ou plusieurs support(s) lisible(s) par ordinateur.
